# EUROPÄISCHE PATENTSCHRIFT

(11) **EP 1 653 112 B1**
(45) Veröffentlichungstag und Bekanntmachung des Hinweises auf die Patenterteilung: **21.09.2011**
(21) Anmeldenummer: 05020538.4
(22) Anmeldetag: 21.09.2005
(51) Int. Cl.: F16F 1/38

(54) **Aufsammeleinrichtung zum Aufnehmen von am Boden liegendem Erntegut**
Pick-up for collecting agricultural produce on the ground
Dispositif de ramassage pour ramasser des produits agricoles sur le sol

(30) Priorität: 12.10.2004 DE 202004015831 U
(43) Veröffentlichungstag der Anmeldung: 03.05.2006
(73) Patentinhaber: CLAAS Saulgau GmbH, 88348 Bad Saulgau (DE)
(72) Erfinder: Gernert, Siegfried, 88339 Bad Waldsee-Mittelurbach (DE)

(56) Entgegenhaltungen:
- EP-A- 0 070 942
- DE-U1- 20 309 687
- FR-A- 2 838 676
- US-A- 3 574 990
- US-A- 3 771 302
- US-A- 4 205 511
- US-A- 4 236 372

## Beschreibung

Die Erfindung betrifft ein Aufsammeleinrichtung zum Aufnehmen von am Boden liegenden Erntegut gemäß dem Oberbegriff des unabhängigen Anspruchs 1.

### Stand der Technik

Aufsammeleinrichtungen dieser Art sind auch bekannt unter dem Namen Pick-up. Sie werden verwand um beispielsweise geschwadetes Erntegut, wie Grünfutter, Heu oder Stroh, vom Boden aufzunehmen, und um dieses beispielsweise einem Feldhäcksler, einer Ballenpresse oder einem Ladewagen zu zuführen.

Da das Gelände nicht immer plan eben ist, die Aufsammeleinrichtung aber möglichst in konstantem Abstand über den Boden gehalten werden muss um Ernteverluste oder Futterverschmutzungen zu vermeiden, werden diese mit bodenkopierenden Tast und Stützrädern am Boden abgestützt. Dieses setzt voraus, dass die mit Rechzinken besetzte Aufnahmetrommel der Aufsammeleinrichtung höhenbeweglich mit dem sie tragenden Trägerfahrzeug verbunden ist und sich dabei unabhängig von diesem der zu überfahrenden Bodenkontur anpassen kann.

Dabei wird ein Teil des Gewichtes der Aufsammeleinrichtung, nachfolgend Pick-up genannt, über die Tast- und Stützräder am Boden abgestützt und der restliche Teil des Gewichtes wird an dem Trägerfahrzeug über dessen Räder am Boden abgestützt. Um das dynamische Verhalten hinsichtlich der Höhenbeweglichkeit der Pick-up zu verbessern, wird die Aufnahmetrommel mit deren Stütz- und Tasträdern gegenüber dem Boden durch Federn gewichtsentlastet, so dass durch die Federkraft ein Teil des Gewichtes der Aufnahmetrommel und dessen Antriebs- und Lagerelemente auf das sie führende Maschinengestell der Pick-up übertragen wird.

Es sind Lösungen bekannt, die aus vorgespannten Zug- oder Druckfedern mit federnden Windungen bestehen, die erhebliche Kosten verursachen und dabei größere Bauräume in Anspruch nehmen. Zudem besitzen derartige Federentlastungen nur geringe Dämpfungseigenschaften, da sie keine Energieabsorbierung beinhalten. Insbesondere durch die hochdynamischen Krafteinwirkungen auf die Lagerstellen der Maschinenelemente der Pick-up sind diese einem hohen Verschleiß ausgesetzt, welches dazu führt, dass diese entsprechend häufig durch Nachschmierung gewartet werden müssen und auch nach entsprechenden Einsatzzeiten sogar durch Austausch der Lagerbuchsen insbesondere an den Schwingenlagerungen erneuert werden müssen. Hier setzt die Erfindung an, um diesen Zustand zu verbessern.

Aus der US-A-3 574 990 ist eine selbstfahrende Mäh- und Aufsammelvorrichtung zum Mähen und Schwader von Grünfutter mit wenigstens einem in Schwingen schwenkbeweglich gelagerten Aufsammelvorrichtung bekannt, wobei wenigstens eine Schwinge in wenigstens einem drehelastischen Torsionselement gelagert ist. Dabei ist das Torsionselement als Torsionsstange ausgebildet.

### Aufgabenstellung

Aufgabe der Erfindung ist es daher, durch konstruktive Maßnahmen eine verbesserte Laufruhe für eine Aufsammeleinrichtung (die Pick-up) zu schaffen, welche die Verschleißerscheinungen mindern, die Wartungsintervalle verlängern und somit die wirtschaftliche Nutzung durch Minderung der Wartungskosten senkt.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, den Aufsammelrotor der Pick-up federungstechnisch durch wenigstens eine Torsionsfeder gegenüber dem Maschinengestell der Pick-up abzufedern und diese dabei gleichzeitig als Lagerungselement auszuführen.

In besonders vorteilhafter Weise kann dieses Lagerelement als ein Verbundelement aus Metall und Gummi oder Metall und zelligem Polyurethan-Elastomer ausgeführt sein.

Die besonderen Vorteile hinsichtlich der Erfindung bestehen darin, dass derartige Federelemente durch das Nichtvorhandensein einer Lagerfuge spielfrei und daher verschleißarme Lager sind, und dabei gleichzeitig eine steile Kraft-Wegkennlinie aufweisen können, welches kleine Bauräume ermöglicht. Auch kann je nach Ausführungsform die Federkennlinie linearer, progressiver oder degressiv oder eine Mischform dessen sein. Beispielsweise ein degressiver Verlauf ermöglicht aus der Nullpunktslage heraus eine steile Federkennlinie, die bei geringen Verformungen bereits eine große Rückstellkraft bewirkt und die sich bei größeren Verdrehwinkeln abflacht, welches sich dann günstig auf die Betriebsbedingungen auswirken kann.

Ein weiterer Vorteil besteht darin, dass derartige Federelemente aufgrund ihrer Hysterese dämpfende Eigenschaften besitzen, welche die höherfrequenten und kurzwelligen Höhenbewegungen der Aufsammeltrommel mit ihren Tast- und Stützrädern gegenüber ihrem Maschinengestell der Pick-up bedämpfen und isolieren, und wobei die Aufsammeltrommel dennoch den langwelligen und größeren Höhenausschlägen beim Überfahren von Senken und Kuppen durch Bodenkopierung weitestgehend unabhängig vom Trägerfahrzeug folgen kann.

Dieses vermittelt der Aufsammeleinrichtung insgesamt einen ruhigeren Lauf, welches das Verschleißverhalten der Pick-up als ganzes mindert und somit einen Beitrag zur Vergrößerung ihrer Lebensdauer und damit auch zur Vergrößerung der Wirtschaftlichkeit beiträgt.

Nähere Einzelheiten der Erfindung sind den nachfolgenden Figurendarstellungen und deren Beschreibungen zu entnehmen.

### Ausführungsbeispiel

Es zeigen:
- Fig. 1: eine Aufsammeleinrichtung (Pick-up) in Arbeitstellung angebaut an einem Feldhäcksler als Trägerfahrzeug
- Fig.2: eine Seitenansicht der Aufsammeleinrichtung (Pick-up) gemäß Fig. 1 in vergrößerter Darstellung auf planebenem Gelände
- Fig.3: eine Seitenansicht der Aufsammeleinrichtung (Pick-up) gemäß Fig. 1 in vergrößerter Darstellung in einem Gelände mit einer Senke
- Fig.4: eine Seitenansicht der Aufsammeleinrichtung (Pick-up) gemäß Fig. 1 in vergrößerter Darstellung in einem Gelände mit einer Erhöhung.

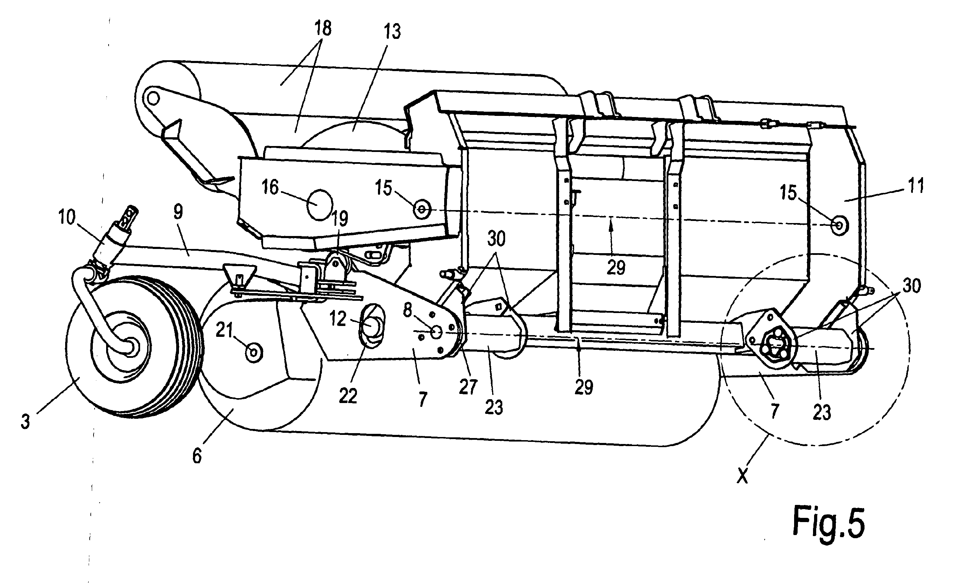

- Fig.5: eine Aufsammeleinrichtung (Pick-up) im abgebauten Zustand in einer perspektivischen Ansicht von hinten

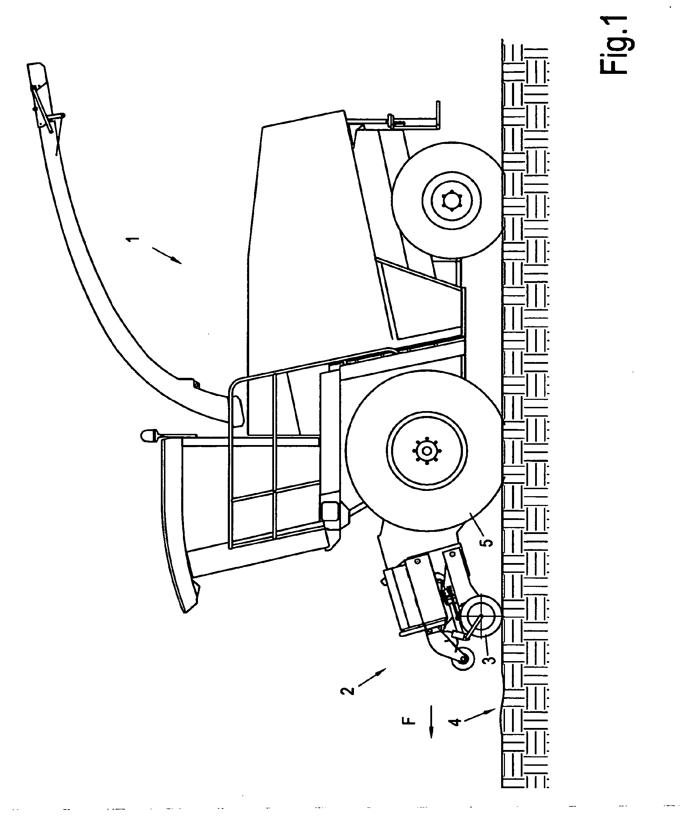

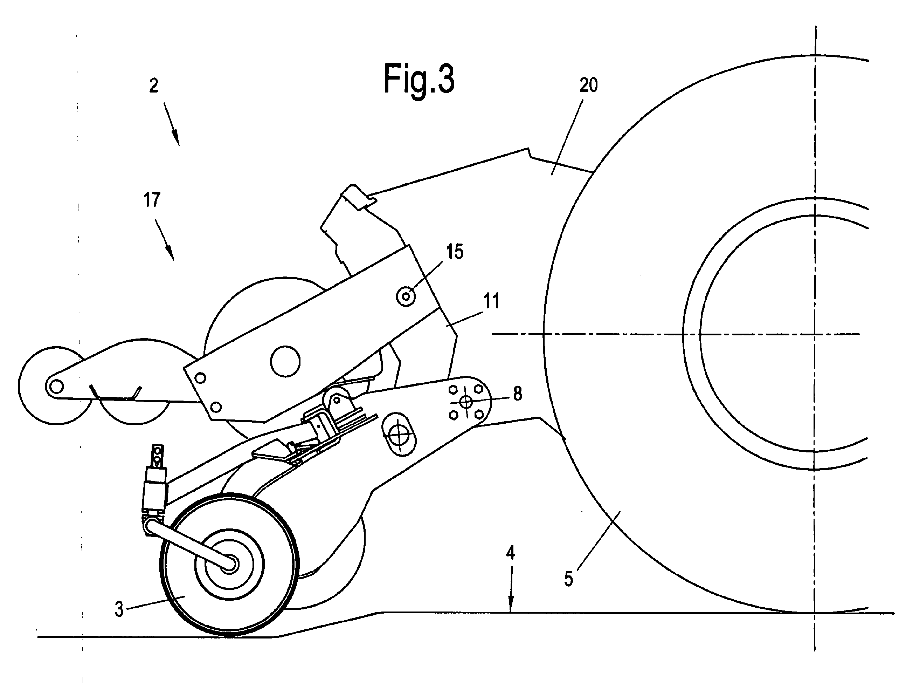

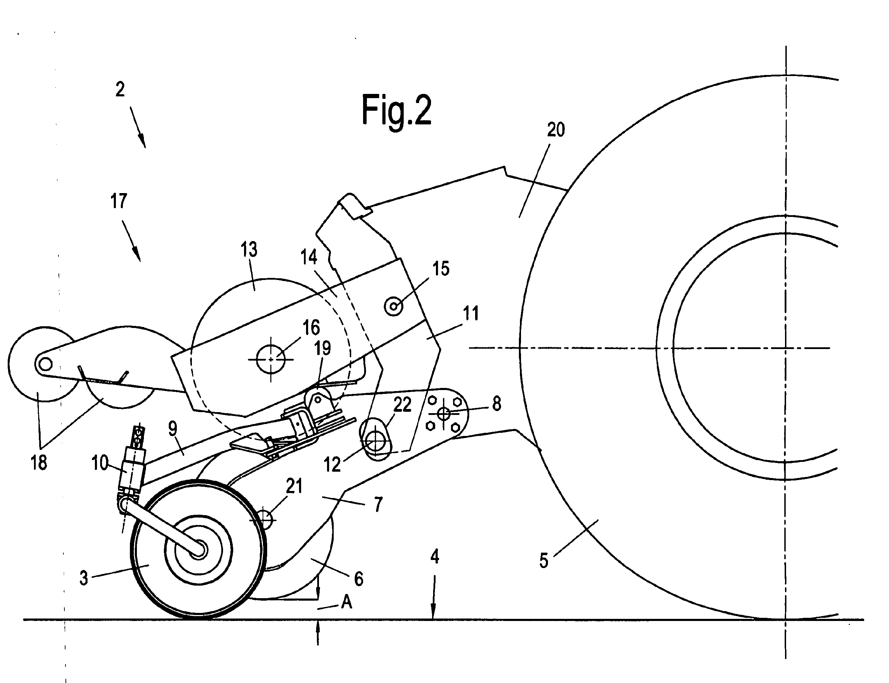

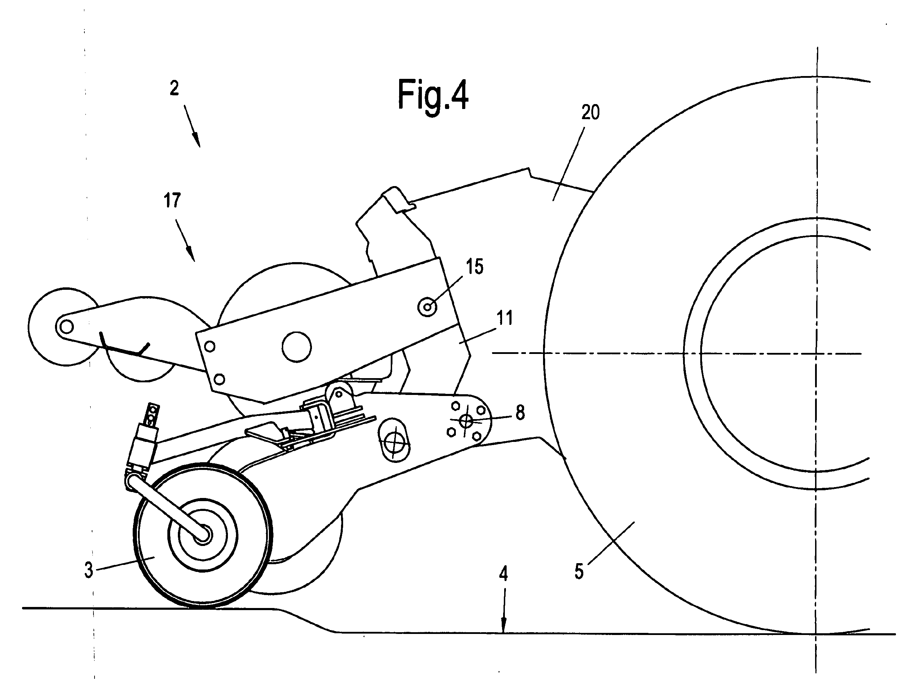

Fig. 1 zeigt als exemplarisches Beispiel der Erfindung eine Aufsammeleinrichtung (Pick-up) 2, angebaut an einem Feldhäcksler als Trägerfahrzeug 1 in Arbeitstellung. Das zu überfahrende Bodenrelief 4 des Geländes als Aufstandsfläche des Trägerfahrzeugs kann planeben sein aber auch Senken und Erhöhungen aufweisen, so wie in den Figuren Fig. 2, Fig.3 und Fig.4 dargestellt.

Die Kontur des zu überfahrenden Bodenreliefs 4 wird während des laufenden Arbeitsprozesses in Fahrtrichtung F von dem Tast- und Stützrad 3 abgegriffen, wodurch der mit umlaufenden Arbeitswerkzeugen, insbesondere Rechzinken bestückte Aufsammelrotor 6, Höhenbewegungen ausgesetzt ist, wobei aber der Abstand A gegenüber dem Bodenrelief 4 möglichst konstant gehalten werden soll. Ermöglicht wird dieses dadurch, dass dem Aufsammelrotor 6 im Außenbereich geringfügig vorlaufend Tast- und Stützräder 3 zugeordnet sind, die das Bodenrelief 4 kopierend abgreifen und auf den Aufsammelrotor 6 übertragen.

Die Tast- und Stützräder 3 sind dabei an einem Stützarm 9 geführt, an dem das Tast- und Stützrad 3 um eine Hochachse 10 zwecks Anpassung an Kurvenradien in der Kurvenfahrt verschwenkbar gelagert ist. Der Stützarm 9 selbst ist an der Schwingen 7 starr gehaltert, und die Schwingen 7 selbst sind in einem Schwenklager 8 an dem Maschinengestell 11 schwenkbeweglich gelagert.

Im vorderen Bereich der Schwingen 7 ist der angetriebene Aufsammelrotor 6 in seinen Lagern 21 dreh- und antreibbar gelagert. Die Schwenkbeweglichkeit der Schwingen 7 um die Schwenkachse der Schwenklager 8 ermöglicht damit die Höhenbewegungen der Tast- und Stützräder 3 relativ zur Drehachse der Schwenklager 8 und damit auch die Höhenbewegungen des Aufsammelrotors 6. Da das Schwenklager 8 selbst fest mit dem Maschinengestell 11 der Pick-up 2 verbunden ist, und dieses mit dem Trägerfahrzeug quasi starr verbunden ist, kann sich der Aufsammelrotor 6 quasi unabhängig vom Trägerfahrzeug 1 höhenveränderlich bewegen.

Oberhalb des Aufsammelrotors 6 liegt die Leit- und Querfördereinrichtung 17, bestehend aus Rollenniederhaltern 18 und Querförderschnecke 13, welche das aufgesammelte Halmgut in den Einzugsschacht 20 des Trägerfahrzeugs 1 leiten und fördern. Die Querförderschnecke 13 ist dabei in Lagern 16 an den freien Enden der Schwingen 14 gelagert. Auch die gesamte Leit- und Querfördereinrichtung 17 ist von Schwingen 14, die in Schwenklagern 15 am Maschinengestell 11 angelenkt sind, aufgenommen. Die gesamte Leit- und Querfördereinrichtung 17 wird dabei Schwerkraft bedingt von den Auflagerollen 19 abgestützt, die sich allerdings auf den Schwingen 7 abstützen.

Beide Einrichtungen der Pick-up 2, der Aufsammelrotor 6 mit seinen Tast- und Stützrädern 3 und die Leit und Querfördereinrichtung 17 mit den Rollenniederhaltern 18 und der Querförderschnecke 13, sind somit in ihren Schwingen 7 bzw. 14 an dem Maschinengestell 11 um die quer zur Fahrtrichtung F verlaufenden Drehachsen der Schwenklager 8 bzw. 15 schwenkbeweglich gelagert, so dass auch beide Einrichtungen 6 und 17 sich schwerkraftbedingt zumindest innerhalb vorgegebenen Grenzen dem Bodenrelief 4 höhenmäßig und unabhängig von der momentanen Aufstandsebene der Vorderräder 5 des Trägerfahrzeugs1 anpassen können.

Begrenzt wir diese Höhenbewegung durch Anschlagzapfen 12, die fest mit dem Maschinengestell 11 in Verbindung stehen, und die ein Langloch 22 der Schwingen 7 durchsetzen. Die Schwenkbeweglichkeit ist somit durch die jeweiligen Endradien des Langlochs, welche als Anschlag dienen, begrenzt.

Das Schwenklager 8 ist dabei als drehelastisches Torsionselement 23, welches beispielweise unter dem Begriff Gummifederelement oder Schwingmetallelement bekannt ist, ausgebildet. Demzufolge sind die beiden außenliegenden Schwingen 7 erfindungsgemäß in je einem drehelastischen Torsionselement 23 gelagert.

Der äußere Lagerkäfig des drehelastischen Torsionselementes 23 umfasst zwei Flanschfüße 30, die an dem Maschinengestell 11 beispielsweise mittels Verschraubungen festgelegt sind. Der äußere Lagerkäfig nimmt in seinem Innenraum das elastisch verformbare Material als federndes Element auf, welches zugleich Verbindung und Abstützung zwischen dem äußeren Lagerkäfig und inneren Lagerkäfig ist.

Der innere Lagerkäfig geht in seiner Längserstreckung über das Ende des äußeren Lagerkäfigs hinaus und mündet in einen Flanschteil 27, der an der Schwinge 7 festgelegt, beispielsweise verschraubt ist. Die Längs und Drehachsen beider drehelastischer Torsionselemente 23 liegen vorteilhafterweise auf einer ihnen gemeinsamen Verbindungsgeraden 29, die gleichzeitig auch die Dreh- bzw. Schwenkachse der Schwingen 7 ist. Die elastische Verformung der federnden Masse innerhalb der drehelastischen Torsionselemente 23 erlaubt somit eine Winkelverdrehung des inneren Lagerkäfigs um dessen Längsachse mit dessen Flanschteil relativ zum äußeren Lagerkäfig und stellt damit gleichermaßen eine Torsionsfeder und ein spielfreies Dreh- bzw. Schwenklager dar.

Derartige drehelastische Torsionselemente 23 haben aufgrund Ihrer Hysterese eine energieabsorbierende und damit gleichermaßen dämpfende Wirkung. Zudem sind die Torsionselemente 23 wegen Ihrer Drehelastizität zugleich spielfreie Lager und somit Federelemente und Lager zugleich und sie benötigen daher keine unterschiedlichen Bauräume für Feder und Lager.

Selbstverständlich ist ebenfalls möglich, auch im Sinne der Bedämpfung und verschleißmindernden Lagerung auch die Schwingen 14 analog der Schwingen 7 mittels eines drehelastischen Torsionselementes 23 in dem Maschinengestell 11 zu lagern.

Um die Stützkräfte, welche von den Tast- und Stützrädern 3 Schwerkraft bedingt gegenüber dem Boden abgestützt werden, zu reduzieren, werden die drehelastischen Torsionselemente 23 durch ein Vorspannmoment so vorgespannt, dass dieses ein aufwärts gerichtetes Drehmoment um die jeweiligen Drehachsen der Schwenklager 8 bzw. 15 erzeugen.

Dadurch werden die an den Schwingen 7 und/oder 14, angreifenden Gewichtskräfte des Aufsammelrotor 6 bzw. der Leit- und Querfördereinrichtung 17 durch die Beaufschlagung mit aufwärtsgerichteten Drehmomenten zum Teil über das Maschinengestell 11 an dem Trägerfahrzeug 1 abgestützt, wodurch die Trägheitskräfte, die der Beschleunigung der Massen von Aufsammelrotor 11 bzw. Leit- und Querfördereinrichtung 17 zwecks ihrer Höhenbeweglichkeit zur Anpassung an das zu überfahrende Bodenrelief 4 entgegen wirken, reduziert werden.

### Bezugszeichenliste

- 1: Trägerfahrzeug
- 2: Aufsammeleinrichtung (Pick-up)
- 3: Tast- und Stützrad
- 4: Bodenrelief
- 5: Vorderrad vom Trägerfahrzeug
- 6: Aufsammelrotor
- 7: Schwingen
- 8: Schwenklager
- 9: Stützradarm
- 10: Hochachse
- 11: Maschinengestell
- 12: Anschlagzapfen
- 13: Querförderschnecke
- 14: Schwingen
- 15: Schwenklager
- 16: Lager
- 17: Leit- und Querfördereinrichtung
- 18: Rollenniederhalter
- 19: Auflagerrolle
- 20: Einzugsschacht
- 21: Lager
- 22: Langloch
- 23: drehelastisches Torsionselement
- 27: Flanschteil

- 29: Verbindungsgerade
- 30: Flanschfuß
- F: Fahrbewegung in Fahrtrichtung
- A: Abstand

## Patentansprüche

1. Aufsammeleinrichtung (2) zum Aufnehmen von am Boden liegenden Erntegut insbesondere für Feldhäcksler, Ladewagen oder Ballenpressen, mit wenigstens einem in Schwingen (7) an einem Maschinengestell (11) der Aufsammeleinrichtung (2) schwenkbeweglich gelagerten Aufsammelrotor (6) mit oder ohne Leit- und Querfördereinrichtung (17), wobei wenigstens eine Schwinge (7,14) in wenigstens einem drehelastisches Torsionselement (23), ausgebildet als Schwenklager (8), in dem Maschinengestell (11) gelagert ist **dadurch gekennzeichnet, dass** das drehelastisches Torsionselement (23) als Gummifederelement ausgebildet ist.

2. Aufsammeleinrichtung (2) nach Anspruch 1, **dadurch gekennzeichnet, dass** wenigstens eine der Schwingen (7 und/oder 14) durch ein vorgespanntes drehelastisches Torsionselement (23) mit einem aufwärtsgerichteten Drehmoment beaufschlagt ist.

3. Aufsammeleinrichtung, nach Anspruch 1 oder 2, **dadurch gekennzeichnet, dass** das drehelastische Torsionselement (23) dämpfende Eigenschaften als Energieabsorbers aufweist.

4. Aufsammeleinrichtung, nach Anspruch 1 oder 2, **dadurch gekennzeichnet, dass** das drehelastische Torsionselement (23) dämpfende Eigenschaften im Sinne eines Energieabsorbers aufweist.

5. Aufsammeleinrichtung, nach Anspruch 1, **dadurch gekennzeichnet, dass** das drehelastische Torsionselement (23) als zelliges Polyurethan-Elastomer -Federelement ausgebildet ist.

## Claims

1. A collecting device (2) for picking up crop material on the ground, in particular for forage harvesters, loading trucks or bale presses, comprising at least one collecting rotor (6) mounted pivotably movably in swing arms (7) on a machine frame (11) of the collecting device (2), with or without a guide and transverse conveyor device (17), wherein at least one swing arm (7, 14) is mounted in the machine frame (11) in at least one rotationally elastic torsion element (23), in the form of a pivot mounting (8), **characterised in that** the rotationally elastic torsion element (23) is in the form of a rubber spring element.

2. A collecting device (2) according to claim 1 **characterised in that** at least one of the swing arms (7 and/or 14) is acted upon with an upwardly directed torque by a prestressed rotationally elastic torsion element (23).

3. A collecting device according to claim 1 or claim 2 **characterised in that** the rotationally elastic torsion element (23) has damping properties as energy absorbers.

4. A collecting device according to claim 1 or claim 2 **characterised in that** the rotationally elastic torsion element (23) has damping properties in the sense of an energy absorber.

5. A collecting device according to claim 1 **characterised in that** the rotationally elastic torsion element (23) is in the form of a honeycombed polyurethane elastomer spring element.

## Revendications

1. Dispositif de ramassage (2) pour ramasser des produits à récolter reposant au sol, en particulier pour des ensileuses, des remorques autochargeuses ou des presses à balles, comprenant au moins un tambour ramasseur (6) qui est monté avec possibilité de pivotement sur des bras oscillants (7), sur un châssis (11) du dispositif de ramassage (2), et est doté ou non d'un dispositif de guidage et de transport transversal (17), au moins un bras oscillant (7, 14) étant monté dans le châssis (11), dans au moins un élément à torsion (23) à élasticité rotative, réalisé sous forme de palier pivotant (8), **caractérisé par le fait que** l'élément à torsion (23) à élasticité rotative est réalisé comme élément élastique en caoutchouc.

2. Dispositif de ramassage (2) selon la revendication 1, **caractérisé par le fait qu'**au moins un des bras oscillants (7 et/ou 14) est sollicité avec un couple dirigé vers le haut, par un élément à torsion (23) à élasticité rotative, mis sous précontrainte.

3. Dispositif de ramassage selon la revendication 1 ou 2, **caractérisé par le fait que** l'élément à torsion (23) à élasticité rotative présente des propriétés amortissantes, en tant qu'absorbeur d'énergie.

4. Dispositif de ramassage selon la revendication 1 ou 2, **caractérisé par le fait que** l'élément à torsion (23) à élasticité rotative présente des propriétés amortissantes dans le sens d'un absorbeur d'énergie.

5. Dispositif de ramassage selon la revendication 1, **caractérisé par le fait que** l'élément à torsion (23) à élasticité rotative est réalisé sous forme d'élément élastique cellulaire en polyuréthane-élastomère.
